(19) Europäisches Patentamt
European Patent Office
Office européen des brevets

(11) **EP 0 926 474 B1**

(12) **EUROPÄISCHE PATENTSCHRIFT**

(45) Veröffentlichungstag und Bekanntmachung des Hinweises auf die Patenterteilung:
**08.12.2010   Patentblatt 2010/49**

(51) Int Cl.:
*G01F 23/26* *(2006.01)*

(21) Anmeldenummer: **97122872.1**

(22) Anmeldetag: **24.12.1997**

(54) **Probe**

Probe

Sonde

(84) Benannte Vertragsstaaten:
**DE FR GB IT**

(43) Veröffentlichungstag der Anmeldung:
**30.06.1999   Patentblatt 1999/26**

(73) Patentinhaber: **Endress + Hauser GmbH + Co. KG**
**79689 Maulburg (DE)**

(72) Erfinder: **Schmidt, Robert**
**79585 Steinen (DE)**

(56) Entgegenhaltungen:
**EP-A- 0 763 723      WO-A-92/21943**
**DE-A- 2 744 820      DE-A- 3 328 210**
**US-A- 4 412 270**

**Beschreibung**

Die Erfindung betrifft eine Sonde mit einem im wesentlichen stabförmigen Sondengehäuse, das einen axialen, konischen Innenraum aufweist, in dem mindestens eine flächige Elektrode angeordnet ist.

Derartige Sonden werden regelmäßig in Verbindung mit Meßgeräten eingesetzt. So weisen z.B. kapazitive Füllstands-Grenzschalter typischerweise eine Sonde mit mindestens einer darin angeordneten Elektrode auf. Das Meßgerät ist beispielsweise auf einer Höhe eines vorbestimmten Füllstands angeordnet. Eine als Meßelektrode dienende Elektrode bildet einen Bestandteil eines Meßkondensators, dessen Kapazität davon abhängt, ob die Sonde von einem Füllgut bedeckt ist oder nicht. Die Gegenelektrode wird durch eine außerhalb der Sonde angeordnete separate Elektrode oder durch eine Wand des Behälters in dem die Sonde angeordnet ist gebildet.

Kapazitive Füllstands-Grenzschalter weisen häufig eine zweite Elektrode, nämlich eine Schirmelektrode, auf. Die Schirmelektrode wird stets auf dem gleichen Wechselspannungspotential wie die Meßelektrode gehalten. Dadurch wird verhindert, daß sich Störeinflüsse, wie z.B. Verschmutzungen oder Ansatzbildungen, auf die Kapazität der Meßelektrode und damit auf das Meßergebnis auswirken.

Ein kapazitiver Schalter dieser Art ist z.B. in der DE-A 195 36 198 beschrieben.

Kapazitive Füllstands-Grenzschalter können zusätzlich eine dritte Elektrode aufweisen. Diese kann ebenfalls als Gegenelektrode dienen und ist vorzugsweise als Masseelektrode ausgebildet, indem sie mit einem Erdpotential oder mit einem Schaltungsnullpunkt einer Schaltung des Grenzschalters verbunden ist.

In der DE-C 27 44 820 ist eine Sonde beschrieben, mit

- einem im wesentlichen stabförmigen Sondengehäuse,

  -- das einen axialen, konischen Innenraum aufweist,

- einem Klemmkonus,

  -- der in dem Innenraum angeordnet ist und

- mindestens einer flächigen Elektrode,

  -- die flächig und spaltfrei an einer Wand des Sondengehäuses angeordnet ist,

Die Herstellung der dort beschriebenen Sonde erfolgt, indem zunächst ein Metallrohr innen und außen mit einer Kunststoffschicht umspritzt wird. Eine Sondenelektrode wird mit einem Metalldraht verbunden und auf einen Isolierkörper geschoben. Anschließend wird der Isolierkörper auf einen Gewindeabschnitt des Metallrohres aufgeschraubt und die gesamte Anordnung mit Kunststoff umspritzt.

Die Herstellung dieser Sonde umfaßt viele Arbeitsgänge und ist unter anderem durch den zweimal erforderlichen Spritzvorgang aufwendig und kostspielig.

In der DE-C 33 28 210 ist ebenfalls eine Sonde beschrieben, mit

- einem im wesentlichen stabförmigen Sondengehäuse,

  -- das einen axialen Innenraum aufweist,
  -- in dem eine flächige Elektrode angeordnet ist.

Das beschriebene Sondengehäuse besteht aus einem rohrförmigen Hauptteil und einer becherförmigen Kappe. Im Inneren des Gehäuses sind drei Elektroden angeordnet. Eine erste Elektrode hat die Form eines flachen in der Kappe eng anliegenden Topfes und dient als Meßelektrode. Eine zweite und eine dritte Elektrode sind jeweils rohrförmig und dienen als Schirmelektrode und als Masseelektrode. Die Elektroden sind in dem Gehäuse durch Abstandshalter voneinander beabstandet und gegeneinander elektrisch isoliert. Die beiden Gehäuseteile, Hauptteil und Kappe, sind durch Ultraschallschweißung fest miteinander verbunden.

Zwar ist es durch das zweiteilige Gehäuse möglich, auf das Umspritzen der Elektroden zu verzichten. Statt dessen müssen jedoch die Gehäuseteile dicht miteinander verbunden werden. Die Verbindung ist aufwendig und wird immer eine mechanische Schwachstelle darstellen.

Bei den beiden oben beschriebenen Sonden aus dem Stand der Technik sind die Elektroden stabile Bauteile, die dem Gehäuse zumindest teilweise dessen mechanische Festigkeit verleihen.

Es ist eine Aufgabe der Erfindung, eine Sonde anzugeben, die robust ist, die einfach und ohne Spezialwerkzeuge zu montieren ist und die kostengünstig herstellbar ist.

Diese Aufgabe wird erfindungsgemäß gelöst, durch eine Sonde nach dem Patentanspruch 1.

Gemäß einer Ausgestaltung weist der Klemmkonus eine axiale zylindrische Bohrung und in Konuslängsrichtung verlaufende, eine Wand des Klemmkonus durchdringende, Ausnehmungen auf, durch die der Klemmkonus in radialer Richtung kompressibel ist.

Gemäß einer weiteren Ausgestaltung ist jede Stirnfläche des Klemmkonus von mindestens einer Ausnehmung durchbrochen. Gemäß einer weiteren Ausgestaltung sind die Elektroden gebogene Bleche, insb. aus Messing, Bronze oder einer anderen Kupferlegierung, die bereits durch deren Federkraft auf dem Klemmkonus haften.

Die Elektroden sind über eine durch die Bohrung des Klemmkonus hindurchgeführte Leitung elektrisch anschließbar und weisen vorzugsweise einen Abschnitt auf, der an einer Ader der Leitung durch Krimpung befestigbar ist.

Gemäß einer weiteren Ausgestaltung besteht das Sondengehäuse aus einem chemisch hochbeständigen in einem weiten Temperaturbereich einsetzbaren Werkstoff, insb. aus Polyphenylensulfid (PPS) oder aus Polybutylenterephtalat (PBT) und der Klemmkonus besteht aus einem harten Kunststoff, insb. aus einem Polyester, z.B. Polybutylenterephthalat (PBT), oder einem Polyamid.

Gemäß einer Ausgestaltung ist eine erste Elektrode eine Meßelektrode, eine zweite Elektrode ist eine SchirmElektrode und eine weitere Elektrode ist eine Masseelektrode eines kapazitiven Füllstands-Grenzschalters ist.

Gemäß einer weiteren Ausgestaltung ist eine Koaxialleitung mit einem Innenleiter und einem Außenleiter vorgesehen und die Meßelektrode ist mit dem Innenleiter und die Schirmelektrode ist mit dem Außenleiter verbunden.

Die Erfindung und deren Vorteile werden nun anhand der Figuren der Zeichnung, in denen ein Ausführungsbeispiel dargestellt ist, näher erläutert; gleiche Elemente sind in den Figuren mit gleichen Bezugszeichen versehen.

Fig. 1    zeigt eine teilweise geschnittene Ansicht einer Sonde;

Fig. 2    zeigt eine perspektivische Ansicht des Klemmkonus von Fig. 1;

Fig. 3    zeigt eine Explosionsansicht des Sondengehäuses, des Klemmkonus und der Elektroden von Fig.1; und

Fig. 4    zeigt eine Grundfläche einer Elektrode.

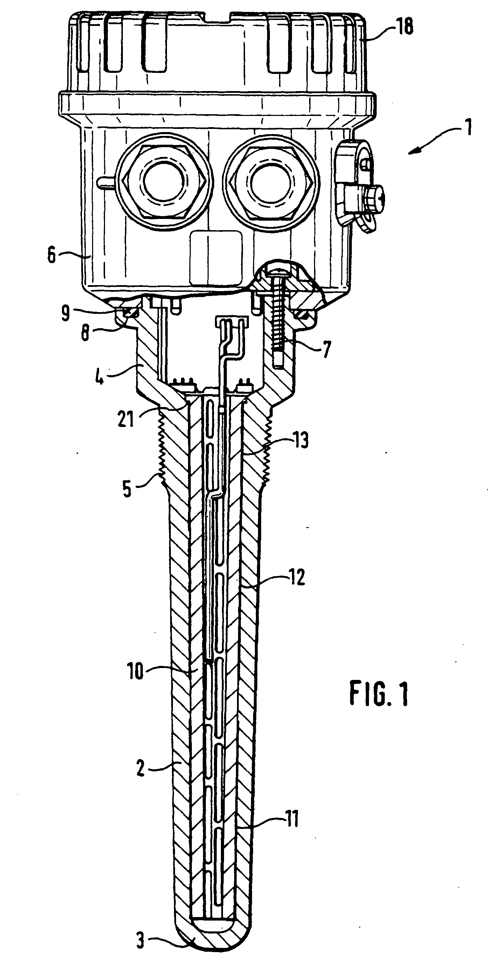

Das in Fig. 1 dargestellte Ausführungsbeispiel einer erfindungsgemäßen Sonde 1 weist ein im wesentlichen stabförmiges Sondengehäuse 2 mit einem einen axialen, konischen Innenraum auf. Das Sondengehäuse 2 weist ein erstes geschlossenes Ende 3 und ein zweites offenes Ende 4 auf. Durch das offene Ende 4 ist der Innenraum zugänglich. Nahe dem offenen Ende 4 ist auf dem Sondengehäuse 2 ein Außengewinde 5 angeordnet, mittels dessen die Sonde 1 an einem Meßort befestigbar ist. Selbstverständlich sind auch andere Befestigungsarten, z.B. mittels eines an das Sondengehäuse 2 angeformten Flansches, einsetzbar.

Das offene Ende 4 ist durch ein weiteres Gehäuse 6 verschlossen, das z.B. zur Aufnahme einer Sondenelektronik dient. Das Gehäuse 6 ist, wie in Fig. 1 dargestellt, mittels Schrauben 7 befestigt. Die Schrauben 7 sind durch eine sondengehäuse-zugewandte Wand des Gehäuses 6 hindurch in das Sondengehäuse 2 eingeschraubt. Auf einer gehäusezugewandten Stirnfläche des Sondengehäuses 2 ist eine Nut 8 zur Aufnahme einer Dichtung 9 vorgesehen, durch die ein Zwischenraum zwischen Gehäuse 6 und Sondengehäuse 2 abgedichtet ist. Das Gehäuse 6 weist auf dessen sondengehäuse-abgewandten Seite eine durch einen Deckel 18 verschließbare Öffnung auf, durch die der Innenraum des Gehäuses 6 und die Schrauben 7 zugänglich sind.

Das Sondengehäuse 2 besteht vorzugsweise aus einem chemisch hochbeständigen in einem weiten Temperaturbereich einsetzbaren Werkstoff, insb. aus Polyphenylensulfid (PPS) oder aus Polybutylenterephtalat (PBT). Polyphenylensulfid (PPS) bietet den Vorteil einer sehr hohen Temperaturbeständigkeit. Es ist sogar bei Temperaturen von 200° C und mehr einsetzbar.

In dem Innenraum des Sondengehäuses 2 ist ein in radialer Richtung kompressiblen Klemmkonus 10 angeordnet. Innenraum und Klemmkonus 10 sind im montierten Zustand formgleich und der Außendurchmesser des Klemmkonus 10 nimmt in gehäuseabgewandter Richtung ab.

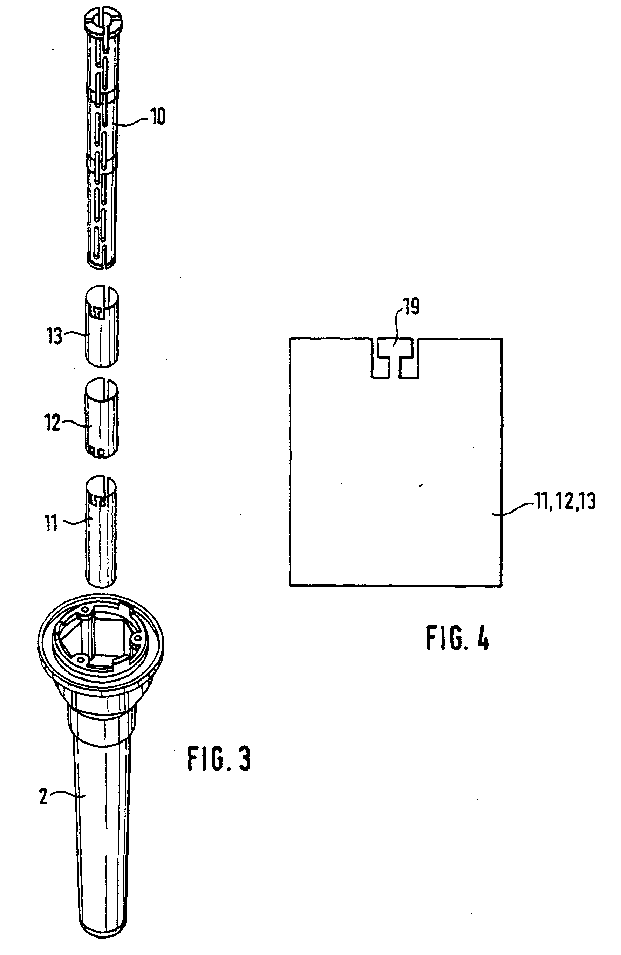

Auf dem Klemmkonus 10 ist mindestens eine flächige Elektrode angeordnet. In dem gezeigten Ausführungsbeispiel sind drei flächige Elektroden 11, 12, 13 übereinander angeordnet. Die Elektroden 11, 12, 13 sind durch den Klemmkonus 10 flächig und spaltfrei gegen eine Wand des Sondengehäuses 2 gepreßt. Die Elektroden 11, 12, 13 sind gebogene Bleche, insb. aus Messing, Bronze oder einer anderen Kupferlegierung. Hergestellt werden die Elektroden 11, 12, 13, indem aus einem Blech Elektroden mit einer viereckigen Grundfläche ausgestanzt und anschließend eingerollt werden bis sie die gewünschte Form annehmen. Die Grundfläche einer Elektrode ist in Fig. 4 dargestellt. Wird, wie in Fig. 4 dargestellt, eine Elektrode mit rechteckiger Grundfläche verwendet, so sind im montierten Zustand einander auf dem Klemmkonus 10 einander gegenüberliegende Kanten gegeneinander geneigt, bei einer Elektrode mit trapezförmigem Querschnitt verlaufen diese Kanten entsprechend parallel zueinander.

Wird die Sonde bei einem kapazitiven Füllstands-Grenzschalters eingesetzt, so dient z.B. die erste Elektrode 11 als Meßelektrode. Die zweite Elektrode 12 kann als Schirmelektroden vorgesehen sein und die dritte Elektrode 13 kann als Masseelektrode eingesetzt sein.

Die Schirmelektrode wird stets auf dem gleichen Wechselspannungspotential wie die Meßelektrode gehalten. Dadurch wird verhindert, daß sich Störeinflüsse, wie z.B. Verschmutzungen oder Ansatzbildungen, auf die Kapazität der Meßelektrode und damit auf das Meßergebnis auswirken.

Die Größe und die Anzahl der Elektroden ist je nach Anwendung beliebig wählbar und lediglich durch die Abmessungen des Klemmkonus 10 beschränkt.

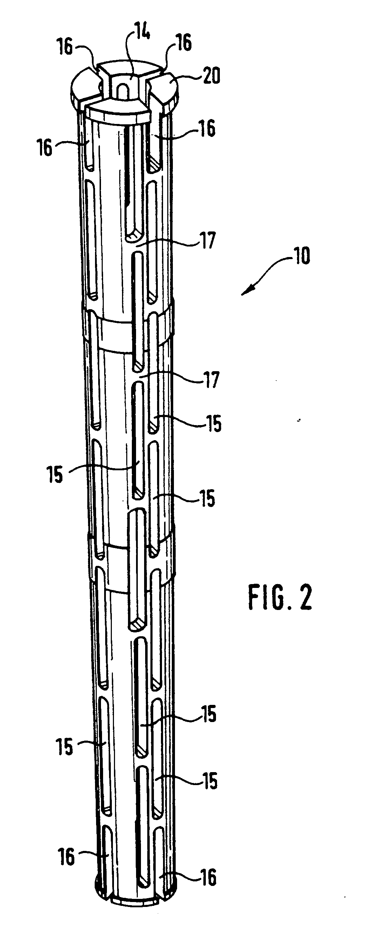

Fig. 2 zeigt eine Ansicht des Klemmkonus 10. Dieser weist eine axiale zylindrische Bohrung 14 und in Konuslängsrichtung verlaufende, eine Wand des Klemmkonus 10 durchdringende Ausnehmungen 15, 16 auf. Jede Stirnfläche des Klemmkonus 10 ist von mindestens einer Ausnehmung 16 durchbrochen. Durch die Bohrung 14 und die Ausnehmungen 15, 16 ist der Klemmkonus 10 in radialer Richtung kompressibel.

Der Klemmkonus 10 besteht vorzugsweise aus einem harten aber nicht spröden Kunststoff, insb. aus einem Polyester, z.B. Polybutylenterephthalat, oder aus einem Polyamid. Diese Werkstoffe weisen im Zusammenhang mit der Geometrie des Klemmkonus 10 federnde Eigenschaften auf.

Die Ausnehmungen 15, 16 sind symmetrisch in dem Klemmkonus 10 angeordnet. Sie weisen jeweils die Form eines Spalts auf. Zwischen endseitig aneinander angrenzenden Ausnehmungen 15, 16 verläuft ein Steg 17.

In dem dargestellten Ausführungsbeispiel sind die Ausnehmungen 15, 16 in vier gleichmäßig um den Klemmkonus 10 verteilten Gruppen angeordnet. Jede Gruppe besteht aus zwei parallel zueinander und parallel zur Konuslängsachse angeordneten Reihen von Ausnehmungen 15, 16. Die benachbarten Reihen sind derart gegeneinander versetzt angeordnet, so daß sich jeder Steg 17 jeweils auf der Höhe der Mitte der parallel dazu verlaufenden Ausnehmung 15 der benachbarten Reihe befindet. Ein jeweils zwischen den beiden Reihen verlaufender Wandstreifen des Klemmkonus 10 weist eine geringe Breite auf und ist daher biegsam. Eine auf die äußere Mantelfläche des Klemmkonus 10 einwirkende Kraft bewirkt dessen Kompression. Dabei erfahren die Wandstreifen eine Durchbiegung und die Größe der Ausnehmungen 15, 16 nimmt ab.

Durch die Ausnehmungen 15, 16 ist der Klemmkonus 10 kompressibel, obwohl er aus einem ansich praktisch nicht elastisch verformbaren Werkstoff besteht. Es werden hierdurch die Vorteile eines harten, stabilen Werkstoffs mit denen eines elastischen Werkstoffs, nämlich dessen Verformbarkeit verbunden.

Vorzugsweise werden für den Klemmkonus 10 und das Sondengehäuse 2 Werkstoffe mit gleichen oder nahezu gleichen thermischen Ausdehnungskoeffizienten eingesetzt. Dadurch ist sichergestellt, daß die beiden Bauteile die gleiche thermische Ausdehnung erfahren.

Die Außenabmessungen des Klemmkonus 10 sind im unbelasteten Zustand, d.h. wenn keine Kraft auf ihn einwirkt, so bemessen, daß er geringfügig größer als der Innenraum des Sondengehäuses 2 ist. Beispielsweise kann ein Klemmkonus 10 mit einer Länge von z.B. 160 mm, dessen kleinster Durchmesser im unbelasteten Zustand 13,3 mm und dessen größter Durchmesser im unbelasteten Zustand 16,3 mm beträgt in einem Sondengehäuse 2 angeordnet sein, dessen Innenraum über die gesamte Länge des Klemmkonus 10 einen Durchmesser aufweist, der 0,3 mm kleiner ist als der entsprechende Außendurchmesser des Klemmkonus 10 im unbelasteten Zustand.

Aufgrund der Kompressibilität des Klemmkonus 10 sind fertigungsbedingte Toleranzen weit weniger kritisch als dies bei Sonden, der Fall ist, bei denen die Elektroden paßgenau in ein Gehäuse eingebracht werden müssen. Durch Toleranzen bedingte Spalte entstehen gar nicht erst, sondern werden direkt durch den kompressiblen Klemmkonus 10 ausgeglichen.

Da die mechanische Stabilität der Sonde 1 durch das Sondengehäuse 2 und den Klemmkonus 10 gewährleistet ist, können die Elektroden 11, 12, 13 aus sehr dünnem Blech, z.B. mit einer Dicke von 0,25 mm, bestehen. Hierdurch wird eine optimale Anpassung der Form der Elektroden 11, 12, 13 an die Form des Innenraums des Sondengehäuses 2 erzielt.

Vorzugsweise ist der Außenradius des Klemmkonus 10 in den Bereichen, die im montierten Zustand von den Elektroden 11, 12, 13 überdeckt sind um die Dicke der Elektroden 11, 12, 13 reduziert. Damit ist die Position der Elektroden 11, 12, 13 eindeutig vorgegeben.

Vorzugsweise ist der Klemmkonus 10 in dem Sondengehäuse 2 in Selbsthemmung angeordnet. Dies wird erreicht, indem der Steigungswinkel $\alpha$ des Klemmkonus 10 kleiner oder gleich 7° ist. Der Tangens des Steigungswinkels $\alpha$ ist gleich dem Verhältnis der Differenz des Größten und des kleinsten Radiuses $r_{MAX}$, $r_{MIN}$ des Klemmkonus 10 zu dessen Länge L

$$\tan \alpha = (r_{MAX} - r_{MIN})/L$$

Bei dem oben genannten Zahlenbeispiel beträgt dieser Winkel sogar nur 0,6 °. Der Klemmkonus 10 sitzt somit fest im Sondengehäuse 2 und ist gegenüber Vibrationen, wie sie z.B. durch an einem Meßort befindliche Pumpen oder Rührwerke oder ähnliche Ursachen entstehen, unempfindlich. Eine zusätzliche Fixierung des Klemmkonus 10 ist nicht unbedingt erforderlich.

Bei der Montage werden zunächst die Elektroden 11, 12, 13 auf den Klemmkonus 10 geschoben. Wie aus der Explosionsdarstellung in Fig. 3 ersichtlich ist dabei mit der Elektrode 13, die den größten Durchmesser aufweist zu beginnen. Nachfolgend sind sukzessive jeweils die verbleibenden Elektroden 12, 11 dem nächst kleineren Innendurchmesser aufzuschieben. Der Innendurchmesser der Elektroden 11, 12, 13 ist dabei jeweils so bemessen, daß die jeweilige Elektrode 11, 12, 13 beim Aufschieben auf deren vorgegebene Position auf dem Klemmkonus 10 geringfügig aufgeweitet wird. Hierdurch wird erreicht, daß die Elektroden 11, 12, 13 bereits durch deren Federkraft auf dem Klemmkonus 10 haften.

Die Elektroden 11, 12, 13 sind jeweils über eine durch die Bohrung 14 des Klemmkonus hindurchgeführte Leitung elektrisch anschließbar.

Hierzu weisen die Elektroden 11, 12, 13, wie in Fig. 4 dargestellt, einen durch Stanzen an einer Stirnseite der jeweiligen Elektrode 11, 12, 13 freigelegten T-förmigen Abschnitt auf. Der Fuß des T's bleibt mit der Elektrode 11, 12, 13 verbunden und der Querbalken ist beweglich. Der elektrische Anschluß erfolgt nun, in dem das T aus der Ebene der Elektrode 11, 12, 13 herausgebogen, der Querbalken um eine Ader der Leitung, herumgebogen und dort durch Krimpung befestigt wird. Nachfolgend wird die Leitung durch eine benachbarte Ausnehmung 15, 16 in dem Klemmkonus 10 und durch die Bohrung 14 hindurch aus dem Sondengehäuse 2 heraus geführt und mit einer in den Figuren nicht dargestellten elektrischen Schaltung verbunden. Die Krimpung kann vor oder nach der Montage der Elektroden 11, 12, 13 auf dem Klemmkonus 10 vorgenommen werden.

Bei einem kapazitiven Füllstands-Grenzschalter ist vorzugsweise eine Koaxialleitung vorgesehen die einen Innenleiter und einen diesen koaxial umgreifenden Außenleiter aufweist. Die Meßelektrode ist vorzugsweise mit dem Innenleiter und die Schirmelektrode ist vorzugsweise mit dem Außenleiter verbunden. Dies bietet den großen Vorteil, daß die Schirmwirkung auch auf die mit der Meßelektrode verbundene Leitung ausgedehnt ist.

In einem nächsten Schritt ist der Klemmkonus 10 mit den darauf befestigten Elektroden 11, 12, 13 in das Sondengehäuse 2 einzuführen. Der Klemmkonus 10 weist an dessen den größeren Radius aufweisenden Ende einen sich radial nach außen erstreckenden Absatzring 20 auf. Dieser liegt im vollständig montierten Zustand an einer in dem Sondengehäuse 2 auf der entsprechenden Höhe angeordneten Absatzfläche 21 auf.

Beim Einführen erfährt der Klemmkonus 10 eine Kompression in radialer Richtung, durch die die zwischen Klemmkonus 10 und Sondengehäuse 2 befindlichen Elektroden 11, 12, 13 flächig und spaltfrei gegen eine Wand des Sondengehäuses 2 gepreßt sind.

Die Spaltfreiheit ist insofern wichtig, als ein Spalt z.B. zwischen der Meßelektrode 11 und dem Sondengehäuse 2 sich auf das Meßergebnis auswirkt wie eine in Reihe zur Meßkapazität geschaltete weitere Kapazität.

Der Klemmkonus 10 übt eine radial nach außen gerichtete Kraft auf das Sondengehäuse 2 aus. Dadurch erhält Sondengehäuse 2 eine zusätzliche Stabilität und Festigkeit. Weiterhin ist das Sondengehäuse 2 einteilig und weist somit neben der genannten mechanischen Beständigkeit je nach Werkstoff eine hohe chemische Beständigkeit auf, die nicht durch Schwachstellen, wie sie Verbindungsstellen zwischen zwei Gehäuseteilen darstellen, reduziert sind.

Das Sondengehäuse 2 ist innen und außen im wesentlichen glatt. Dies bietet Vorteile, da derart geformte Teile z.B. als Spritzteile einfacher herstellbar sind, und da glatte Formen ohne Absätze und/oder Hinterschneidungen eine höhere mechanische Stabilität aufweisen.

Falls dies z.B. aus Sicherheitsgründen erforderlich ist, ist der nach der Montage des Klemmkonus 10 mit den Elektroden 11, 12, 13 verbleibende Hohlraum im inneren des Sondengehäuses 2 oder ein durch eine eingefügte Sperre abgegrenzter Teilraum davon mit einer Vergußmasse ausgefüllt.

**Patentansprüche**

1. Sonde (1) mit

    - einem im wesentlichen stabförmigen Sondengehäuse (2),

        -- das einen axialen, konischen Innenraum aufweist,

    - einem Klemmkonus (10),

        -- der in dem Innenraum angeordnet ist und

    - mindestens einer flächigen Elektrode (11, 12, 13),

        -- sie flächig und spaltfrei an einer Wand des Sondengehäuses (2)angeordnet ist,

    **dadurch gekennzeichnet, daß**
    - der Klemmkonus (10) in radialer Richtung kompressibel ist,
    - die flächige Elektrode (11, 12, 13) auf dem Klemmkonus (10) angeordnet und durch den Klemmkonus (10) gegen eine Wand des Sondengehäuses (2) gepreßt ist.

2. Sonde nach Anspruch 1, bei der der Klemmkonus (10)

        -- eine axiale zylindrische Bohrung (14) und
        -- in Konuslängsrichtung verlaufende, eine Wand des Klemmkonus (10) durchdringende Ausnehmungen (15, 16) aufweist, durch die der Klemmkonus in radialer Richtung kompressibel ist.

3. Sonde nach Anspruch 2, bei der jede Stirnfläche des Klemmkonus (10) von mindestens einer Ausnehmung (16) durchbrochen ist.

4. Sonde nach Anspruch 1, bei der die Elektroden (11, 12, 13) gebogene Bleche, insb. aus Messing, Bronze oder einer anderen Kupferlegierung, sind, die bereits durch deren Federkraft auf dem Klemmkonus (10) haften.

5. Sonde nach Anspruch 1, bei der die Elektroden (11, 12, 13) über eine durch die Bohrung (14) des Klemmkonus (10) hindurchgeführte Leitung elektrisch anschließbar sind.

6. Sonde nach Anspruch 5, bei der die Elektroden (11, 12, 13) einen Abschnitt aufweisen, der an einer Ader der Leitung durch Krimpung befestigbar ist.

7. Sonde nach Anspruch 1, bei dem das Sondengehäuse (2) aus einem chemisch hochbeständigen in einem weiten Temperaturbereich einsetzbaren Werkstoff, insb. aus Polyphenylensulfid (PPS) oder aus Polybutylenterephtalat (PBT) besteht.

8. Sonde nach Anspruch 1, bei der der Klemmkonus (10) aus einem harten Kunststoff, insb. aus einem Polyester, z.B. Polybutylenterephthalat (PBT), oder einem Polyamid, besteht.

9. Sonde nach Anspruch 1, bei der eine erste Elektrode (11) eine Meßelektrode eines kapazitiven Füllstands-Grenzschalters ist.

10. Sonde nach Anspruch 9, bei der eine zweite Elektrode (12) vorgesehen ist, die eine SchirmElektrode eines kapazitiven Füllstands-Grenzschalters ist.

11. Sonde nach Anspruch 10, bei der eine Koaxialleitung mit einem Innenleiter und einem Außenleiter vorgesehen ist und bei der die Meßelektrode mit dem Innenleiter und die Schirmelektrode mit dem Außenleiter verbunden ist.

12. Sonde nach Anspruch 9, 10 oder 11, bei der eine weitere Elektrode (13) vorgesehen ist, die eine Masseelektrode eines kapazitiven Füllstands-Grenzschalters ist.

**Claims**

1. Probe (1) with

 - a primarily rod-like probe housing (2)

 -- which has an axial, conical interior

 - a clamping cone (10)

 -- which is arranged in the interior and

 - at least one planar electrode (11, 12, 13)

 -- which is arranged flat and gap-free on a wall of the probe housing (2),

 **characterized in that**

 - the clamping cone (10) can be compressed in a radial direction
 - the planar electrode (11, 12, 13) is arranged on the clamping cone (10) and is pressed against a wall of the probe housing (2) by the clamping cone.

2. Probe as per Claim 1 in which the clamping cone (10)

 -- has an axial cylindrical borehole (14) and
 -- has recesses (15, 16), which run along the longitudinal direction of the cone and penetrate a wall of the clamping cone (10), via which the clamping cone can be compressed in a radial direction.

3. Probe as per Claim 2 where every face of the clamping cone (10) is penetrated by at least one recess (16).

4. Probe as per Claim 1 where the electrodes (11, 12, 13) are curved sheet metal, particularly brass, bronze or another copper alloy, whose elastic force already causes them to fit on the clamping cone (10).

5. Probe as per Claim 1 where the electrodes (11, 12, 13) can be connected electrically via a cable routed through the borehole (14) of the clamping cone (10).

6. Probe as per Claim 5 where the electrodes (11, 12, 13) have a section which can be secured to a wire of the cable by crimping.

7. Probe as per Claim 1 where the probe housing (2) is made of a material, particularly polyphenylene sulfide (PPS), or polybutylene terephthalate (PBT), which has excellent chemical resistance properties and can be used in a wide temperature range.

8. Probe as per Claim 1 where the clamping cone (10) is made of a hard plastic, particularly polyester, e.g. polybutylene terephthalate (PBT), or a polyamide.

9. Probe as per Claim 1 where a first electrode (11) is a measuring electrode of a capacitance level limit switch.

10. Probe as per Claim 9 where a second electrode (12) is provided which is a screen electrode of a capacitance level limit switch.

11. Probe as per Claim 10 where a coaxial cable is provided with an inner conductor and an outer conductor, and where the measuring electrode is connected to the inner conductor and the screen electrode is connected to the outer conductor.

12. Probe as per Claim 9, 10 or 11 where another electrode (13) is provided which is a ground electrode of a capacitance level limit switch.

**Revendications**

1. Sonde (1) avec

 - un boîtier de sonde (2) pour l'essentiel en forme de tige,

-- qui présente un espace intérieur conique, axial,

- un cône de serrage (10),

-- qui est disposé dans l'espace intérieur et

- au moins une électrode plane (11, 12, 13),

-- qui est disposée à plat et sans jeu sur une paroi du boîtier de sonde (2),

**caractérisée en ce que**

- le cône de serrage (10) est compressible en direction radiale,
- l'électrode plane (11, 12, 13) est disposée sur le cône de serrage (10) et pressée par le cône de serrage (10) contre une paroi du boîtier de sonde (2).

2. Sonde selon la revendication 1, pour laquelle le cône de serrage (10)

-- présente un alésage cylindrique axial (14) et
-- des évidements traversants (15, 16) dans une paroi du cône de serrage (10), paroi s'étendant dans le sens longitudinal du cône, évidements à travers lesquels le cône de serrage est compressible en direction axiale.

3. Sonde selon la revendication 2, pour laquelle chaque face frontale du cône de serrage (10) est percée par au moins un évidement (16).

4. Sonde selon la revendication 1, pour laquelle les électrodes (11, 12, 13) sont des tôles cintrées, notamment en laiton, bronze ou un autre alliage de cuivre, qui adhèrent rien qu'avec leur force élastique sur le cône de serrage (10).

5. Sonde selon la revendication 1, pour laquelle les électrodes (11, 12, 13) peuvent être raccordées électriquement par l'intermédiaire d'un câble introduit à travers l'alésage (14) du cône de serrage (10).

6. Sonde selon la revendication 5, pour laquelle les électrodes (11, 12, 13) présentent une partie, qui peut être fixée par sertissage à un conducteur du câble.

7. Sonde selon la revendication 1, pour laquelle le boîtier de sonde (2) est constitué d'un matériau chimiquement très résistant, utilisable dans une large plage de températures, notamment en polysulfure de phénylène (PPS) ou en polybutènetéréphtalate (PBT).

8. Sonde selon la revendication 1, pour laquelle le cône de serrage (10) est constitué d'une matière plastique dure, notamment en polyester, p. ex. en polybutènetéréphtalate (PBT), ou un polyamide.

9. Sonde selon la revendication 1, pour laquelle une première électrode (11) est une électrode de mesure d'un détecteur de niveau capacitif.

10. Sonde selon la revendication 9, pour laquelle est prévue une deuxième électrode (12), qui est une électrode écran d'un détecteur de niveau capacitif.

11. Sonde selon la revendication 10, pour laquelle est prévu un câble coaxial avec un conducteur intérieur et un conducteur extérieur, et pour laquelle l'électrode de mesure est reliée avec le conducteur intérieur et l'électrode écran avec le conducteur extérieur.

12. Sonde selon la revendication 9, 10 ou 11, pour laquelle est prévue une électrode (13) supplémentaire, qui est une électrode de masse d'un détecteur de niveau capacitif.

FIG. 1

FIG. 2

FIG. 3

FIG. 4

**EP 0 926 474 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19536198 A
- DE 2744820 C
- DE 3328210 C